Europäisches Patentamt

European Patent Office

Office européen des brevets

(11) Publication number: **0 243 894 B1**

# EUROPEAN PATENT SPECIFICATION

(45) Date of publication of patent specification: **29.09.93**  (51) Int. Cl.⁵: **B01J 35/10,** C10G 49/02

(21) Application number: **87106000.0**

(22) Date of filing: **24.04.87**

(54) **Hydroprocessing catalyst and support having bidisperse pore structure.**

(30) Priority: **02.05.86 US 859104**

(43) Date of publication of application:
**04.11.87 Bulletin  87/45**

(45) Publication of the grant of the patent:
**29.09.93 Bulletin  93/39**

(84) Designated Contracting States:
**AT BE CH DE FR GB IT LI LU NL SE**

(56) References cited:
EP-A- 0 032 298          DE-A- 3 207 554
FR-A- 2 361 154          GB-A- 2 106 535
US-A- 4 054 508          US-A- 4 134 856
US-A- 4 225 421

(73) Proprietor: **W.R. Grace & Co.-Conn.**
**Grace Plaza, 1114 Avenue of the Americas**
**New York, New York 10036-7794(US)**

(72) Inventor: **Pereira, Carmo Joseph**
**1912 Middlebridge Drive**
**Silver Spring Maryland 20906(US)**
Inventor: **Cheng, Wu-Cheng**
**10325 Whitewasher Way**
**Columbia Maryland 21044(US)**

(74) Representative: **UEXKÜLL & STOLBERG Paten-**
**tanwälte**
**Beselerstrasse 4**
**D-22607 Hamburg (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a catalyst support with a unique bimodal micropore size distribution and to a method of making a hydroprocessing catalyst using the support.

Shiroto et al in US-A-4,444,655 discuss extensively eight different types of processes for hydrotreating using various kinds of catalysts and point out that none of the processes is satisfactory. Their solution is to use a catalyst having 1-30% by of catalytic metals (1) where the average pore diameter (APD) is from about 18 to 50 nm (180 to 500 Å), (2) where the minimum total pore volume is calculated by a formula which is dependent on the APD and which has at least 0.35 cm$^3$/g of volume in pores from 18 to 50 nm (180 to about 500 Å) and (3) where the total surface area is at least 104 m$^2$/g.

Of interest to the present invention is Shiroto et al's description of processes for hydrodesulfurization and demetallization characterized by using a catalyst having a double peak in its pore volume. This is their prior art process (5) which they say "is based on the fact that in the hydrotreatment of heavy hydrocarbon oils, desulfurization is not very largely influenced by intrapore diffusion, while demetallization is largely affected by it. According to this process, there is used a catalyst provided with both small pores having a diameter not greater than about 10 nm (100 Å), and macropores having a diameter of at least about 50 nm (500 Å), or even at least about 100 nm (1,000 Å). Although this catalyst does certainly relax the limitations relating to the diffusion of metal-containing high molecular compounds into the pores, it shows a sharp reduction in activity due to metal accumulation in the pores having a diameter not greater than about 10 nm (100 Å), and the mouths of these pores are likely to be blocked, as is the case with the catalyst used for the group (1) [which is their prior art catalyst with small pores]. Thus, the catalyst for the group (5) fails to maintain a high activity for a long time for the feedstock oil having a high metal content, and eventually , only the larger pores act mainly for demetallization. Therefore, it is not considered to have an improved efficiency over the catalysts for groups (1) and (3) [which is their prior art catalyst with macro pores] which are used individually.

Mulaskey in US-A-4,102,822 discloses a catalyst composition in the form of a pack of particles with different size particles without reference to the pore size distribution of these particles. There are channels forming interconnected macropores which contribute from 3 to 45% of the pore volume. A further and special advantage of the catalyst is that a mixture of two or more different kinds of particles having different catalytic activities may be used in the preparation of the catalyst pack or cluster therein, thereby yielding a catalyst having bi- or polymodal activity.

US-A-4,225,421 describes a bimodal catalyst comprising a support that can comprise two refractory oxide compositions, in which support 60 to 95% of the pore volume can have small micropores less than 10 nm in diameter and 15% of the pore volume can have large micropores from 20 to 60 nm in diameter, which support can be impregnated with a Group VIB metal.

It is an object of this invention to prepare a catalyst support containing a bimodal distribution in the micropore region below 60 nm (600 Å).

It is a further object of this invention to prepare a catalyst support containing a bimodal micropore size distribution and a controlled amount of macroporosity.

It is a further object of this invention to prepare a catalyst support containing a bimodal micropore size distribution wherein different materials are used together to achieve the desired pore diameters.

It is a further object of this invention to prepare a desulfurization and demetallization catalyst containing such bimodal micropore size distribution.

The invention is directed to a catalyst support for hydrotreating heavy feeds containing large metal bearing molecules which support is characterized by having a bimodal micropore size distribution where the micropores have an average pore diameter of less than 60 nm (600 Å), said support comprising formed particles made of two different refractory oxide compositions differing in their micropore size, namely

    a) one composition having small micropores of an average pore diameter of less than 10 nm (100 Å) suitable for desulfurization; and

    b) another composition having large micropores of an average pore diameter of 10 to less than 60 nm (100 to less than 600 Å) suitable for demetallization;

the pore volume of the large micropore region comprising 10 to 90% and that of the small micropore region comprising 10 to 90% of the total pore volume.

The pore volumes of the two micropore modes are chosen such that feed molecules can diffuse into the pellet via each of the microporous pathways. The size of the smaller micropores serves to screen out the larger metal containing molecules from entering the pores according to a "screen door" effect described by Hamner in US-A-4,051,021. This screen door effect is a phenomenom that permits entry of relatively small molecules such as sulfur into the pores while simultaneously inhibiting the entry of relatively

2

large molecules. In Hamner's patent, the catalyst had only small pores and the larger molecules passed through the reactor virtually untreated. It is the object of the present invention to optimally provide both small and larger micropores within a single catalyst pellet.

The higher surface activity of the small micropore materials will enhance the hydrodesulfurization activity of the catalyst. The smaller micropore region, which screens out the larger metal bearing molecules while allowing entry to the smaller sulfur molecules, typically has an average diameter of less than 10 nm (100 Å).

The larger micropores are chosen such that the pore size is equal to or larger than 10 nm (100 Å) and much larger than the average diameter of the metal bearing molecules. As will be discussed below, the average metal bearing molecules have sizes of 2 nm (20 Å) or higher as determined, for example, by Gel Permeation Chromatography or Size Exclusion Chromatography with an Inductively Coupled Plasma. Thus larger micropores will result in increased catalyst demetallation activity and life. The larger micropore region has larger micropores where the average diameter is between about 10 an 60 nm (100 and 600 Å) and more preferably between 10 and 25 nm (100 and 250 Å).

These catalyst supports can be made in the form of formates such as extrudates. As a result there may be larger pores between the grains of the refractory oxide which will serve as macropores.

By adding various known desulfurization metals and demetallization metals in each of the two micropore modes very effective catalysts can be formed for use in hydroprocessing heavy feeds. In one embodiment for making the catalyst support two different types of powders are mixed together. One provides the small micropores and the other provides the larger micropores. Either powder can be preloaded with desulfurization and/or demetallation metals.

Although the exact theory of how the catalyst works is not known, perhaps the following analysis will aid in understanding the invention. The large-micropore, low-metals impregnated fraction of the catalyst are thought to allow the metals in the petroleum which are to be removed to access the catalyst internals where they react within the catalyst pores and deposit as metal sulfides. The small-pore alumina fraction impregnated with desulfurization metals such as Co and Mo are considered to provide the necessary desulfurization activity.

In the Drawings

Fig. 1 is a representation of the two types of materials which can make up the catalyst support in a preferred embodiment.

Fig. 2 is a graph illustrating the initial selectivity of hydrotreating catalysts.

Fig. 3 is a comparison of bimodal micropore size catalysts and unimodal catalysts of varying micropore diameter.

Fig. 4 is a graph illustrating the pore volume distribution versus the pore diameter for the bimodal micropore size.

Fig. 5 is a graph illustrating the pore volume distribution versus the pore diameter for the bimodal micropore size supports containing macropores.

Fig. 6 is a graph illustrating the pore volume distribution versus the pore diameter for the bimodal micropore size catalysts containing macropores.

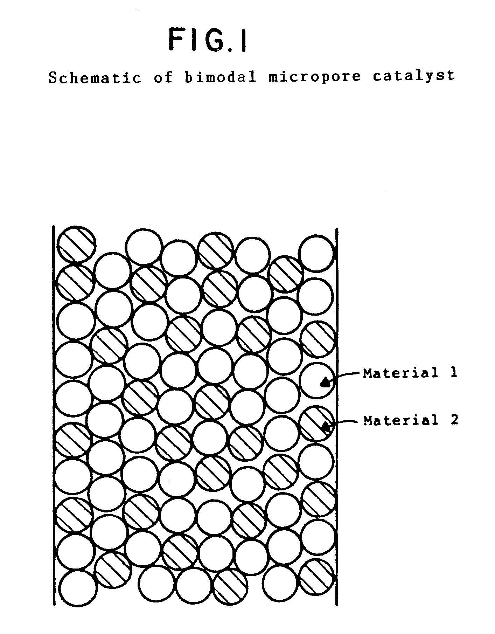

The catalyst support and resulting catalyst is made of two types of micropore materials. As seen in Fig. 1, the small pore micropore material can be designated Material 1 and it preferably has an average pore diameter below about 10 nm (100 Å). The larger micropore material is designated Material 2 in Fig. 1 and it is chosen to preferably have a pore diameter much larger than the size of the metal bearing molecules in the heavy feed being treated for desulfurization and demetallization. Since the molecular size distribution for the metal bearing species may range from 2 nm (20 Å) to as large as 10 nm (100 Å), the size of the larger micropores is chosen so that most of the molecules can easily diffuse through. The large micropore region should have larger micropores where the average pore diameter is at least five times the average diameter of the metal bearing molecules in a heavy feed to be processed, Between about 10 nm and 60 nm (100 and 600 Å) and more preferably between 10 and 25 nm (100 and 250 Å). The amount of the small micropore material and the large micropore material can each range from 5% to 95% by weight of the total with the more preferred ranges being 30%-70%.

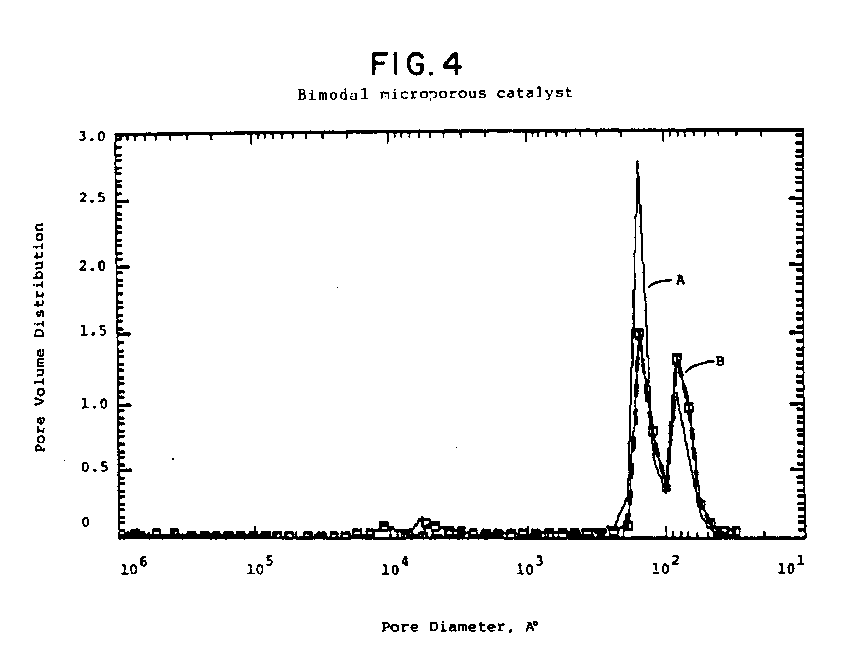

Surface area is measured using the BET technique that is standardly practiced in the art. The cumulative pore volume distribution is obtained using Hg porosimetry. In this method, the pressure of Hg is increased and the volume intruded into the sample is measured. The instrument used was a "Micromeretics Autopore 9200". The pore volume distribution is obtained by relating the intrusion pressure to diameter (using a contact angle of 140°) and by differentiating the cumulative pore volume distribution. An example of such a distribution is shown in Figure 4 and consists of two distinctly separated peaks in the micropore region. A point in between the two peaks is identified and the pore volume in each of the micropore modes is obtained. Hg porosimetry is also used to calculate the fractional contribution of each of the micropore modes to the total surface area. For a fraction $\text{alpha}_s$ of surface area from smaller micropores, the diameters are calculated as

$$d_{\text{smaller micropores}} = \frac{4 \times V_{\text{smaller micropores}}}{\text{alpha}_s \times (\text{BET Surface area})}$$

and

$$d_{\text{larger micropores}} = \frac{4 \times V_{\text{larger micropores}}}{(1-\text{alpha}_s)(\text{BET Surface Area})}$$

The size of the metals bearing molecules will vary depending on the quality and type of the feedstock treated. For example, using analytical and preparative Gel Permeation Chromatography at ambient conditions, the average size of the vanadium bearing molecules may be as large as 6.5 nm (65 Å) for an Arab Light vacuum resid and 4.0 nm (40 Å) for a Wilmington crude (Hall and Herron, Adv. Chem. Ser. 195, 1981, page 149). Processing conditions such as temperature, pressure, and gas composition (as, for example, hydrogen partial pressure) may also effect the size of the metal and sulfur bearing species. The larger asphaltenic molecules are believed to deflocculate at reaction conditions thereby reducing their size. This is evident from the fact that at higher temperatures a larger fraction of the asphaltenes are able to enter the pores of a given catalyst (Richardson and Alley, Prepr. Div. of Petr. Chem., American Chemical Society, Philadelphia, 1975).

Most of the metals are contained in the maltene and asphaltene fractions of the feedstock. The size of the metal bearing species at reaction conditions varies from 2 to 5 nm (20 to 50 Å). Larger micropore diameters in the range of 10 to 60 nm (100-600 Å) would allow metal molecules to easily access the internals of the catalyst.

Most of the sulfur bearing species in heavy oils are either thiophene, benzothiophene or dibenzothiophene based and have a molecular size of between 0.6 and 1 nm (6 to 10 Å). A small fraction of the sulfur may also be present in the asphaltene fraction and have a larger molecule size. Smaller micropore diameters in the range 3 to 10 nm (30-100 Å) would be suitable for the treatment of most of the sulfur species.

The two sizes of micropores can be formulated by various means. For example, one can use different forms of alumina. One form would be made of grains of small micropores while the other form is made of grains of larger micropores. By mixing these two forms together one obtains the desired mixture. As another example, one could take grains of one pore size of alumina and calcine a portion to change its pore size. A third possibility is to use two completely different materials having different pore sizes such as alumina and silica. These grains could then be mulled together and extruded in a manner standardly practiced in the art. Calcination treatment after extrusion could be used to additionally modify the pore structure of the extrudate.

After mixing together the two different size micropore materials they can be extruded to form formates. During the process of extrusion there may be channels between the various grains which form macropores having diameters greater than 60 nm (600 Å) Such a resulting catalyst support can be characterized trimodal since it has a bimodal micropore size characterization with the two different types of micropore regions and it then has this third region of much larger micropores.

To form the catalyst various metals can be added to the catalyst support. Among the conventionally known desulfurization metals are metals of Group VIB such as Cr, Mo and W and Group VIII which include Fe, Co, and Ni in addition to six other members which are Ru, Rh, Pd, Os, Ir and Pt with preferred metals being Mo, W, Ni and Co, with especially preferred metals being Co and Mo. After the Co and Mo are added to the catalyst and calcined it forms CoO and $MoO_3$ and this $MoO_3$ can be present in an amount of 0.1-30% by weight with CoO present in the 0.1-5% by weight range. The demetallization metals include members of Group VIB which are Cr, Mo and W; members of Group VIII as listed above; members of Group VB which are V, Nb and Ta; and members of Group VIIB which are Mn, Tc and Re. Especially preferred metals are Mo as well as other low activity and especially hydrogenation metals such as Fe, Mn, Ni, Co, and W. Again these metal oxides can be present in a weight range of 0.1-30% by weight.

4

In general it is preferred to have the Mo oxide present in the small micropores in an amount of 8-30% by weight and to have the metal oxide present in the larger micropores in an amount of 0.1-8% by weight. One way to obtain this different level of metal oxide loadings is to impregnate the small micropore grains with desulfurization metals such as Co and Mo and to then separately impregnate the large micropores with either a different material which is a demetallization metal, or to a lesser extent.

Another preparation method that may be used is the equilibrium adsorption of metals onto the alumina surface with an excess of impregnation solution. In this case, the Mo loading in each of the grains will be proportional to the local surface area.

Catalysts can also be prepared by the incipient wetness method of impregnation which is standardly practiced in the art.

Another way to make the catalysts is to first impregnate particles of a refractory oxide powder having a small micropore region with an average pore diameter of less than 10 nm (100 Å) with one or more desulfurization catalytic metal components belonging to Groups VIB and VIII of the Periodic Table. These impregnated particles are then mixed with a refractory oxide powder having a large micropore region with an average diameter which is much larger than the average diameter of the metal bearing molecules in a heavy feed to be processed. The mixture is formed into catalyst particles and the particles are calcined to form a hydrotreating catalyst. In a further modification of this embodiment, after the catalyst particles are formed and before calcination, the catalyst particles can be further impregnated with one or more demetallization catalytic metal components belonging to Groups VB, VIB, VIIB and VIII of the Periodic Table. Then after the calcination the resulting catalyst will have desulfurization metals in the small pores in the proper amount and the demetallization metals in the larger pores.

Catalysts of this invention prepared having less than 5% of pores of diameter greater than 60 nm (600 Å) are preferred in the treatment of lighter feeds because of increased surface area. Macropores would reduce the active surface area per volume of reactor but may be preferred in cases where high metal levels in the feed may cause external plugging of the catalyst pores.

In addition to extruding the material in conventional cylindrical shapes, it is also possible to extrude in any type of geometrical shape including in the shape of an extrudate support structure having a cylindrical hollow annular configuration with internal reinforcing vanes as disclosed in US-A-4,510,263.

The catalysts can be used in a process for hydrotreating a heavy hydrocarbon oil containing asphaltenes. Such a process involves preferably reacting the heavy hydrocarbon oil in the presence of the catalyst with hydrogen at a temperature of between 300° and 500°C, with a hydrogen pressure of between 50 and 250 bar and with a liquid space velocity of between 0.1 and 10 hour$^{-1}$.

Although the exact mechanism as to how the present catalyst exhibits such superior results is not known, the following mathematical rationale may provide some theoretical and conceptual explanation. Consider a bimodal micropore size extrudate made up of grains having two different pore structures and activites but the same total porosity as shown in Figure 1. The effective diffusion coefficient in each grain is given by

$$D_{e,i} = D_i (I - d_{molecule}/d_{pore,i})^4 \qquad (1)$$

where $D_i$ is the effective diffusion coefficient in the absence of configurational diffusion, d is the pore diameter, and i = micrograin (i = 1), macrograin (i = 2) or macropore (i = 3). The effective diffusion coefficient in the catalyst pellet

$$D_{e,pellet} = \epsilon_1 D_{e,1} + \epsilon_2 D_{e,2} + (I - \epsilon_1 - \epsilon_2) D_{e,3} \qquad (2)$$

where $\epsilon$ is the porosity. The Thiele modulus (defined standardly in chemical reaction engineering) is given as

$$\Phi^2 = R^2 [(k_1 \epsilon_1 \eta_1 + k_2 \epsilon_2 \eta_2)/D_{e, pellet}]^{0.5} \qquad (3)$$

where R is the equivalent radius of a spherical pellet and $\eta_i$ is the effectiveness factor,

$$\eta_i = I_i (k_i/D_{e,i})^{0.5} \text{ for } i = 1,2 \qquad (4)$$

where $I_i$ is the diameter of the grain and $k_i$ is the volumetric rate constant. The conversion at the reactor outlet for a first order reaction rate

$$\psi = I - \exp [10,800\ D_{e,pellet}\ (I-\epsilon_r)\ \Phi \coth \Phi - I)/(LHSV)(R^2)] \qquad (5)$$

where $\epsilon_r$ is the reactor void fraction and LHSV is the liquid hourly space velocity.

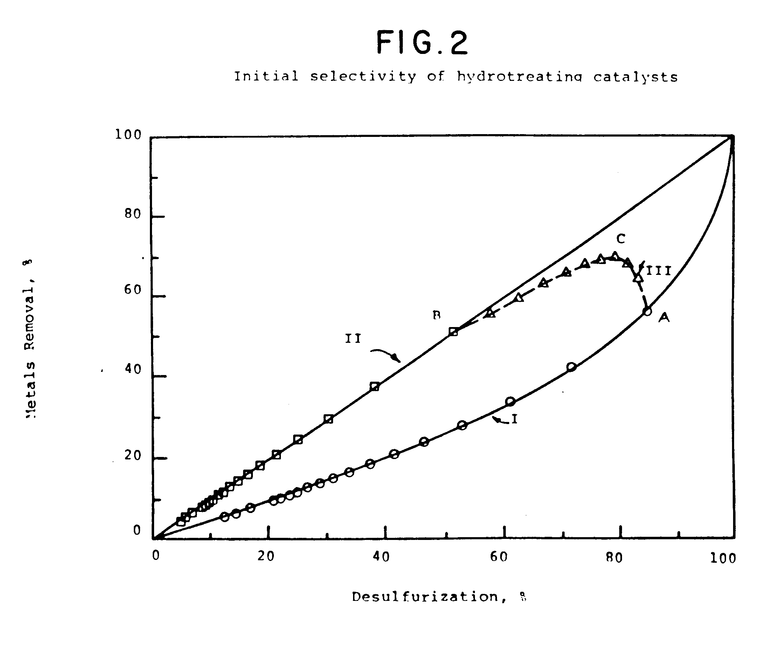

Let us assume that the rate constant $k_i$ is proportional to the surface area of the grain. This would typically be the case if the catalysts were prepared using an equilibrium adsorption process with excess impregnation solution. Also, assume that the sulfur containing molecules are 0.7 nm (7 Å) in size, that the metal bearing species are 4 nm (40 Å) in size and that the intrinsic rate constant for both metals and sulfur removal is the same. We can now construct a selectivity diagram as shown in Figure 2. Curve I in Figure (2) illustrates the initial selectivity performance of a unimodal catalyst having 7 nm (70 Å) micropores. Curve II in Figure 2 represents the initial activity of a 20 nm (200 Å) unimodal catalyst. Points A and B show the initial activity of the small and large pore catalysts at the same LHSV. Curve III (Figure 2) shows the initial selectivity performance of the catalysts of this invention. The catalysts are prepared by mixing various volume fractions of grains having 7 nm (70 Å) and 20 nm (200 Å) pores. Catalyst desulfurization activity decreases as one proceeds from Point A to Point B along Curve III in Figure 2. However, the demetallation activity is maximum at Point C. A catalyst at point C would contain from 30-40 vol % of the smaller pore material.

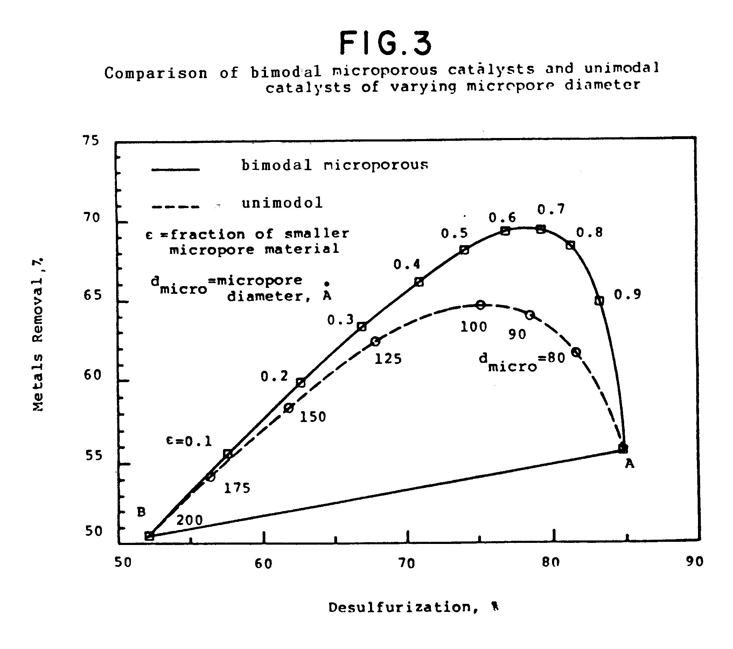

Unimodal catalysts having larger sized micropores can also be prepared for comparison. Figure 3 compares the initial performance of the catalyst of this invention with that of a unimodal micropore catalyst of varied micropore diameter. The catalyst of this invention represented by the solid line has a higher initial metals removal at a fixed desulfurization level compared with the various unimodal micropore catalysts represented by the dashed line.

We also believe that the catalyst of the invention will have a longer life compared with a catalyst having only the smaller micropores. Since a substantial fraction of pores on the external surface on the catalyst are larger micropores, the time for catalyst deactivation via pore mouth plugging will be comparable to that of a catalyst having only larger micropores.

To illustrate the superior selectivity characteristics of the bimodal micropore size catalyst, we have compare the performance of such a catalyst with that of unimodal catalysts having smaller and larger micropore diameters in Examples 5, 6 and 7. As is seen from Tables (4), (5) and (6), the catalyst of the present invention shows superior performance compared with the other unimodal catalysts.

After having described the superior catalysts according to the present invention and having presented the mathematical model analysis above which supports the unique results that our catalyst can obtain, it is interesting to return to the Shiroto patent on hydrotreating. The Shiroto et al patent divides hydrotreating developments for the removal of sulfur, metals, nitrogen, and asphaltenes fall into eight categories. Neither it, nor any other patents of which we are aware, discuss catalysts with bimodal micropore size distributions as in the case of the present invention. Shiroto et al's category (3) relates to catalysts with pores greater than 20 nm (200 Å) which are also the type of pores used in his catalyst. Such catalysts show superior metals and asphaltene removal activity and durability. However, the desulfurization activity of such catalysts is lower because of the lower surface area of the catalyst.

Categories (4) and (5) in the Shiroto et al patent discuss overall bimodal pore size distribution in which the pores greater than 20 nm (200 Å) serve as access channels into the catalyst. However, the incorporation of such large pores inevitably leads to a decrease in the available alumina surface area per reactor volume and to lower hydrodesulfurization activity. In the present invention, the pore diameter of the larger micropores is reduced so the larger micropores contribute significantly to the surface area. This can be accomplished by sizing such pores in the range of 10 to 60 nm (100-600 Å) and preferably in the 10 to 25 nm (100-250 Å) range. The smaller micropores provide the necessary surface area to accomplish desulfurization. Similarly we prefer to make the macropores formed by the channels between the grains be as small as possible without restricting diffusion into the pellets so as to increase surface area.

Having described the basic aspects of our invention, the following examples are given to illustrate specific embodiments thereof.

Example 1

This example illustrates making a bimodal micropore size catalyst support according to this invention which is substantially free of macropores (i.e. with a diameter greater than 60 nm (600 Å).

A slurry of 450 grams of Davison SRA alumina in 950 ml of water was heated in a 2 liter autoclave at 175 °C for 4 hours. The alumina was dried at 110 °C. The hydrothermal treatment increases the pore diameter of the alumina. Mixtures of the hydrothermally treated SRA and Catapal® were used to prepare extrudates with bimodal microporosity. In one procedure identified as Run A, 150 g of hydrothermally treated SRA were mixed with 150 g of Catapal® and mulled with 170 ml of a 0.35% polyvinyl alcohol solution. In the second procedure identified as Run B, 193 g of hydrothermally treated SRA were mixed with 400 g of Catapal® and mulled with 320 ml of a 0.6% polyvinyl alcohol solution. The pore structure of the 1.27 mm extrudates after calcination for 2 hours at 760°C is shown in Figure 4. The macropore volume of these samples has been reduced to less than 0.07 cm$^3$/g. The pore structures are set forth in Table 1.

Example 2

This example demonstrates the flexibility in controlling the relative pore volumes of the two different size micropores to make catalyst supports.

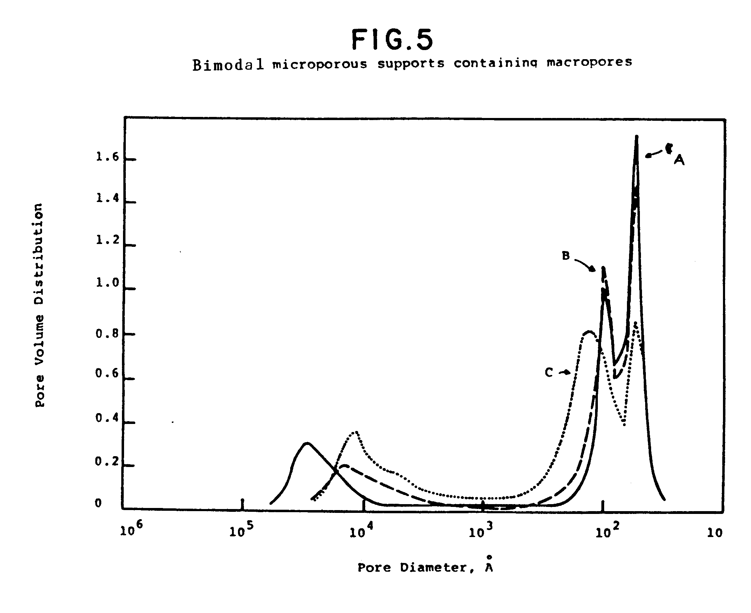

Three bimodal micropore size extrudates were prepared by combining varying amounts of calcined SRA (2 hours at 954°C with uncalcined Catapal® which is an alumina made by Conco Co. and which has micropores of around 3 to 8 nm (30-80 Å). The extrudates labelled A, B and C contained respectively 10, 20, and 50% alumina from the calcined SRA. The extrudates were calcined for 2 hours at 593°C and their pore size distributions are shown in Figure 5. The pore structures are set forth in Table 1.

Example 3

This example illustrates that the bimodal micropore size distribution support may be obtained by extrusion of powders of different chemical compositions.

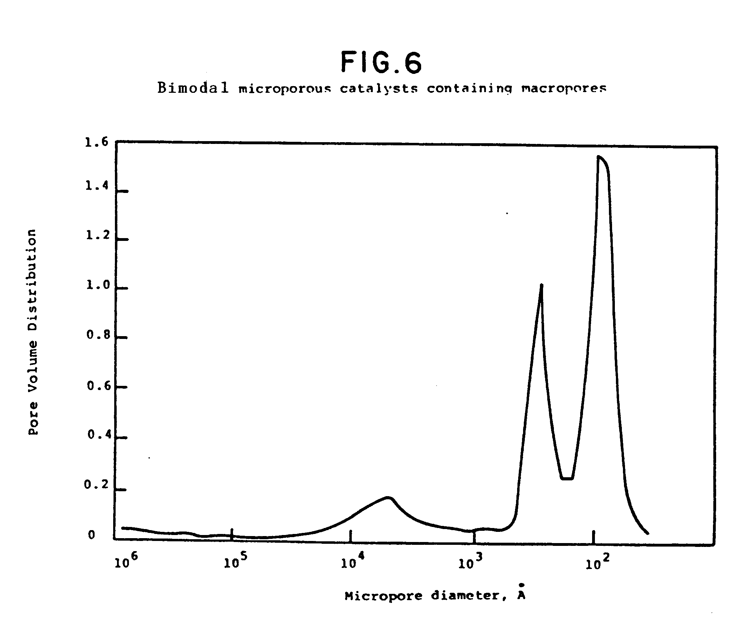

Two hundred grams of SRA alumina were mixed with 86 grams of a large pore silica (Davison ACOD® 243) in a Simpson Mix-Muller for 5 minutes. A solution of 16.3 ml of $HNO_3$ in 240 ml of water was added to the powder and mulling continued until the mixture turned to a soft paste. The paste was neutralized with 13.4 ml of concentrated $NH_4OH$ and extruded into 1.6 mm extrudates. The extrudates were calcined for 2 hours at 871°C. The pore size distribution is shown in Figure 6. There are two pore size distributions in the micropore regions. One has a pore diameter of about 34.1 nm (341 Å) and the other has a pore diameter of about 10 nm (100 Å). The pore structure is set forth in Table 1.

TABLE 1

Properties of Bimodal Supports

| | Example 1 | | Example 2 | | | Example 3 |
|---|---|---|---|---|---|---|
| | A | B | A | B | C | |
| $V_{larger, micro}$ (cm³/g) | 0.38 | 0.25 | 0.25 | 0.30 | 0.40 | 0.23 |
| $d_{larger}$ (Å) | 172 | 168 | 111 | 122 | 178 | 341 |
| $V_{smaller, micro}$ (cm³/g) | 0.17 | 0.24 | 0.22 | 0.19 | 0.14 | 0.42 |
| $d_{smaller}$ (Å) | 90 | 95 | 73 | 71 | 62 | 108 |
| $V_{macro}$ (cm³/g) | 0.03 | 0.07 | 0.20 | 0.14 | 0.22 | 0.16 |
| BET surface area (m²/g) | 164 | 161 | 211 | 205 | 190 | 182 |
| Pellet density (g/cm³) | 1.113 | 1.129 | 0.998 | 1.046 | 0.931 | 0.842 |

## Example 4

A trimodal extrudate catalyst according to the present invention was made as follows.

SRA alumina powder which was prepared according to the method set forth in US-A-4,154,812 was calcined at 982°C for 2 hours. Catapal® alumina powder obtained from Conoco was separately impregnated with 14.7% $MoO_3$ and 3.3% $CoO$ by the pore filling method with a solution of ammonium heptamolybdate and cobalt nitrate. The impregnated powder was dried at 110°C. A 50:50 by weight mixture (on an $Al_2O_3$ basis) of the calcined SRA powder and the impregnated Catapal® was mulled together and extruded as 1.6 mm cylindrical extrudates. These extrudates were further impregnated with molybdenum and cobalt by spraying with a solution of ammonium heptamolybdate and cobalt nitrate such that the resulting catalyst had 12.9% $MoO_3$ and 3.0% CoO on a total catalyst basis. This catalyst was oven dried and calcined at 593°C for 3 hours.

The physical properties are set forth in Table 2.

### Comparison Example 1

A bimodal extrudate catalyst was made as follows.

A commercially available 1.6 mm extrudate catalyst contained 16.7% $MoO_3$ and 3.9% CoO on a total catalyst basis.

The physical properties are set forth in Table 2. It is bimodal in the sense that it has micropores and much larger macropores. It does not have the micropore region divided into two zones.

### Comparison Example 2

A bimodal cylindrical extrudate of 1.6 mm diameter was prepared from SRA alumina. This support was calcined for two hours at 871°C and impregnated with a solution of crude phosphomolybdic acid and cobalt nitrate to obtain a catalyst having 15% $MoO_3$, 3.3% CoO and 1% P on a total catalyst basis. The catalyst was oven dried and calcined at 538°C for two hours. The physical properties are set forth in Table 2. Again, it is bimodal in the sense that it has micropores and much larger macropores, but it does not have the micropore region divided into two zones.

### Comparison Example 3

A commercially available unimodal catalyst having 14.4% $MoO_3$, 3.18% CoO, 9.9% $SiO_2$ and 0.11% P was obtained for comparison. This catalyst has a small micropore diameter of 7,8 nm (78 Å). The physical properties are set forth in Table 2. It does not have any larger size pores to treat or carry in the large metal bearing molecules.

### Comparison Example 4

A bimodal cylindrical extrudate of 1.6 mm diameter was prepared from SRA alumina. The support was calcined for two hours at 760°C and impregnated with a solution of cobalt nitrate, ammonium heptamolybdate and citric acid to obtain a catalyst have 12.9% $MoO_3$, 2.9% CoO on a total catalyst basis. The catalyst was oven dried and calcined at 538°C for two hours. The physical properties are set forth in Table 2. The catalyst is bimodal in the sense that it has micropores and much larger macropores, but it does not have the micropore region divided into two zones.

TABLE 2

COMPARISON OF CATALYST PROPERTIES

CATALYST

| | Example 4 | Comp. Ex 1 | Comp. Ex 2 | Comp. Ex 3 | Comp. Ex 4 |
|---|---|---|---|---|---|
| $V_{micro}$, $cm^3/g$ | $0.49^a$ | 0.46 | 0.50 | 0.48 | 0.54 |
| smaller | $0.11^b$ | | | | |
| larger | $0.38^b$ | | | | |
| $d_{micro}^a$, (Å) | $100^a$ | 94 | 143 | 78 | 111 |
| smaller | $64^b$ | | | | |
| larger | $119^b$ | | | | |
| $V_{macro}$, $cm^3/g$ | 0.22 | 0.28 | 0.18 | – | 0.18 |
| $d_{macro}$, (Å) | 10,000 | 4000 | 3000 | – | 4000 |
| Pellet density $(g/cm^3)$ | 0.98 | 0.95 | 1.04 | 1.26 | 0.98 |
| BET surface area $(m^2/g)$ | 197 | 196 | 140 | 248 | 195 |
| Bulk density $(g/cm^3)$ | 0.60 | 0.58 | 0.64 | 0.77 | 0.60 |

[a] Micropore volume and diameter are summations of the properties of the two micropore modes.

$$d_{micro} = \frac{4 \times V_{micro}}{BET\ surface\ area}$$

[b] As explained in the text.

Example 5

The catalysts according to Example 4 and Comparison Examples 1-3 prepared above were compared for their initial activity for sulfur and metals removal.

The catalysts were evaluated at a liquid hourly space velocity (LHSV) of 0.5 using a Lloydminster feed (the properties of which are set forth in Table 3) at a temperature of 399°C, a pressure of 105 bar and a hydrogen circulation of 891.5 $m^3/m^3$ oil. The stabilized initial activity comparisons after 36 hours of testing for sulfur, nickel and vanadium removal are set forth in Table 4.

TABLE 3

| FEED PROPERTIES | | |
|---|---|---|
| | Lloydminster Feed | Boscan Feed |
| Ni (ppm) | 71 | 160 |
| V (ppm) | 151 | 1600 |
| S (wt%) | 4.50 | 6.40 |
| Nitrogen (wt%) | 0.54 | 0.70 |
| CCR (%) | 16.5 | 18.9 |
| Asphaltenes (%) | 24.0 | 25.6 |
| API gravity | 7.4 | 5.4 |

TABLE 4

| COMPARISON OF STABILIZED INITIAL ACTIVITIES LSHV 0.5 | | | | |
|---|---|---|---|---|
| Conversion (w%) of: | Catalyst | | | |
| | Example 4 | Comp. Ex. 1 | Comp. Ex. 2 | Comp. Ex. 3 |
| Sulfur | 76.7 | 63.7 | 63.8 | 66.1 |
| Vanadium | 79.2 | 62.9 | 62.9 | 46.2 |
| Nickel | 67.6 | 54.8 | 54.8 | 47.3 |

The catalyst of Example 4 according to the present invention is seen to be clearly superior for sulfur and metals removal. The two bimodal catalysts of Comp. Exs. 1 and 2 have similar micropore volumes as our catalyst of Example 4, but they do not have the micropore region divided into two zones as is the present catalyst with its bimodal micropore size region having one mode with a diameter below 10 nm (100 Å) and second mode, above 10 nm (100 Å), having a diameter of 14 nm (140 Å). These two comparison catalysts have similar activity, but in all instances they are not as selective as our catalyst.

The unimodal catalyst of Comp. Ex. 3 does not have the larger pores needed for demetalization and thus it is seen to have the lowest metals activity of all of the catalysts.

Example 6

This example illustrates the durability testing of the catalysts.

The catalysts of Example 4 and Comparison Examples 1, 2 and 3 were compared for sulfur and metals removal for 40 days on stream. The conditions of the test were Lloydminster vacuum resid, 399°C, 105 bar, 1.0 LHSV and a hydrogen circulation of 713 $m^3/m^3$ oil. The relative activities of sulfur and metals removal as a function of time on stream are shown in Table 5.

**TABLE 5**

Comparison of Catalyst Performance as a Function of Days on Stream

| Days on Stream | Relative Activity for Nickel Removal | | | | Relative Activity for Vanadium Removal | | | | Relative Activity for Sulfur Removal | | | |
|---|---|---|---|---|---|---|---|---|---|---|---|---|
| | 10 | 20 | 30 | 35 | 10 | 20 | 30 | 35 | 10 | 20 | 30 | 35 |
| Example 4 | 100 | 91 | 83 | 80 | 100 | 88 | 83 | 81 | 100 | 80 | 70 | 69 |
| Comp. Ex. 1 | 72 | 65 | 64 | - | 71 | 65 | 64 | - | 107 | 84 | 81 | - |
| Comp. Ex. 2 | 91 | 80 | 73 | 71 | 89 | 81 | 72 | 71 | 93 | 72 | 70 | 69 |
| Comp. Ex. 3 | 79 | 56 | 53 | 52 | 64 | 44 | 43 | 43 | 112 | 75 | 64 | 60 |

The catalyst of the present invention in Example 4 shows superior performance in demetallation over all other catalysts tested and is only marginally less active to Comparison Example 1 in desulfurization after 30 days on stream.

12

Example 7

This example illustrates another durability testing of the catalysts.

The catalyst of Example 4 and Comparison Example 4 were compared for sulfur and metals removal using a Boscan Feed, the properties of which are set forth in Table 3. The reactor was operated in the upflow mode and the conditions of the test were 399 °C, 140 bar, 1.0 LHSV and a hydrogen circulation of 713 $m^3/m^3$ oil. The relative activities for sulfur and metals removal are shown in Table 6. The catalyst of the present invention in Example 4 shows superior demetallation and desulfurization performance and longer life than Comparison catalyst 4.

TABLE 6

Comparison of Catalyst Life

Relative Activity*

| Time on Stream (Days) | Example 4 | | | Comp. Ex. 4 | | |
|---|---|---|---|---|---|---|
| | Ni | V | S | Ni | V | S |
| 6 | 100 | 100 | 100 | 94.4 | 89.8 | 87.1 |
| 9 | 65.7 | 63.0 | 60.0 | 51.9 | 44.1 | 52.2 |
| 12 | 49.1 | 43.3 | 37.7 | 36.1 | 22.8 | 28.5 |
| 15 | 38.9 | 31.5 | 26.2 | 30.6 | 20.5 | 22.7 |

*Based on first order rate constant for metals removal and one and a half order rate constant for sulfur removal.

**Claims**

1. A catalyst support adapted for use as a catalyst support for hydrotreating heavy feeds containing large metal bearing molecules, characterized in that said support has a bimodal micropore size distribution where the micropores have an average pore diameter of less than 60 nm (600 Å), said support comprising formed particles made of two different refractory oxide compositions differing in their

14

micropore size, namely

a) one composition having small micropores of an average pore diameter of less than 10 nm (100 Å) suitable for desulfurization; and

b) another composition having large micropores of an average pore diameter of 10 to less than 60 nm (100 to less than 600 Å) suitable for demetallization;

the pore volume of the large micropore region comprising 10 to 90% and that of the small micropore region comprising 10 to 90% of the total pore volume.

2. The catalyst support according to claim 1, wherein the large micropores have an average pore diameter which is at least five times the average diameter of the metal bearing molecules in the heavy feed to be processed.

3. The catalyst support according to claim 1, wherein the small micropore composition is of alumina and the large micropore composition is of silica.

4. The catalyst support according to claim 1, wherein the amount of the small micropore composition and the large micropore composition is each in the range from 30% - 70%.

5. A method of making the catalyst support of claims 1 to 4 comprising

a) forming particles of a refractory oxide powder of

i) one composition having small micropores of an average pore diameter of less than 10 nm (100 Å) suitable for desulfurization; and

ii) another composition having large micropores of an average pore diameter of 10 to less than 60 nm (100 to less than 600 Å) suitable for demetallization;

the pore volume of the large micropore region comprising 10 to 90% and that of the small micropore region comprising 10 to 90% of the total pore volume; and

b) calcining the particles.

6. The method according to claim 5, wherein one composition is alumina to provide small micropore region and the other composition is silica to provide the large micropore region.

7. A method of making a hydrotreating catalyst adapted for treating heavy feeds containing large metal bearing molecules comprising impregnating the calcined support of claims 1 to 4 with one or more catalytic metal components selected from the group consisting of a metal belonging to Groups VB, VIB, VIIB and VIII of the Periodic Table, said catalytic metal components being present in an amount of between 0.1% and 30% in terms of metal oxide based on the total weight of said catalyst.

8. The method according to claim 7 comprising impregnating the small micropore composition with a catalytically effective amount of a desulfurization metal oxide before the catalyst support is formed and impregnating the large micropore composition with a catalytically effective amount of a demetallization metal oxide either before or after the catalyst support is formed.

9. The method according to claim 8, wherein the metal in the desulfurization metal oxide is selected from the group consisting of

a) Group VIB metals which are Cr, Mo and W;

b) Group VIII metals which are Fe, Co, Ni, Ru, Rh, Pd, Os, Ir and Pt; and

c) mixtures thereof.

10. The method according to claim 9, wherein the desulfurization metals are Mo and Co and wherein the Mo is present at a loading of from 8-30 wt% expressed as $MoO_3$ and wherein the Co is present at a loading of from 0.1-5 wt% expressed as CoO.

11. The method according to claim 8, wherein the metal in the demetallization metal oxide is selected from the group consisting of

a) Group VIB metals which are Cr, Mo and W;

b) Group VIII metals which are Fe, Co, Ni, Ru, Rh, Pd, Os, Ir and Pt; and

c) Group VB metals which are V, Nb and Ta;

d) Group VIIB metals which are Mn, Tc and Re; and

15

e) mixtures thereof.

12. The method according to claim 11, wherein the demetallization metals are Mo and Co and wherein the Mo is present at a loading of from 0.1-8 wt% expressed as $MoO_3$ and wherein the Co is present at a loading of from 0.1-2 wt% expressed as CoO.

13. The method according to claims 7 to 12 comprising
   a) impregnating the small micropore composition with one or more components selected from the group consisting of metals of Group VIB and VIII;
   b) mixing the impregnated particles from step (a) with the large micropore composition;
   c) forming catalyst particles from the mixture; and
   d) calcining the particles to form a hydrotreating catalyst.

14. The method according to claim 13, wherein after step (c) the catalyst particles are further impregnated with one or more demetallization catalytic metal components selected from the group consisting of metals of Group VB, VIB, VIIB and VIII.

15. The method according to claim 13, wherein before step (b) the large micropore composition has been impregnated with one or more components selected from the group consisting of metals of Groups VB, VIB, VIIB and VIII.

**Patentansprüche**

1. Katalysatorträger, der sich eignet zur Anwendung als ein Katalysatorträger für die Wasserstoffbehandlung schwerer Beschickungen, die große metalltragende Moleküle enthalten, dadurch gekennzeichnet, daß der Träger eine bimodale Mikroporengrößenverteilung hat, in welcher die Mikroporen einen durchschnittlichen Porendurchmesser von weniger als 16 nm (600 Å) haben, wobei der Träger geformte Teilchen umfaßt, die aus zwei verschiedenen Zusammensetzungen aus feuerfestem Oxid hergestellt sind, welche in ihrer Mikroporengröße differieren, nämlich
   a) eine zur Desulfurierung geeignete Zusammensetzung, die kleine Mikroporen eines durchschnittlichen Porendurchmessers von weniger als 10 nm (100 Å) hat; und
   b) eine andere zur Demetallisierung geeignete Zusammensetzung, die große Mikroporen eines durchschnittlichen Porendurchmessers von 10 bis weniger als 60 nm (100 bis weniger als 600 Å) hat; und
   wobei das Porenvolumen des Bereichs großer Mikroporen 10 bis 90 % ausmacht und das des Bereichs der kleinen Mikroporen 10 bis 90 % des gesamten Porenvolumens ausmacht.

2. Katalysatorträger nach Anspruch 1, in welchem die großen Mikroporen einen durchschnittlichen Porendurchmesser haben, der mindestens das Fünffache des durchschnittlichen Porendurchmessers der metalltragenden Moleküle in der zu behandelnden schweren Beschickung ausmacht.

3. Katalysatorträger nach Anspruch 1, in welchem die Zusammensetzung mit kleinen Mikroporen aus Aluminiumoxid und die Zusammensetzung mit großen Mikroporen aus Kieselsäure ist.

4. Katalysatorträger nach Anspruch 1, in welchem die Menge der Zusammensetzung mit kleinen Mikroporen und mit großen Mikroporen jeweils in dem Bereich von 30 bis 70 % liegt.

5. Verfahren zum Herstellen des Katalysatorträgers der Ansprüche 1 bis 4 durch
   a) Bilden von Teilchen aus Pulver feuerfesten Oxids aus
      i) einer zur Desulfurierung geeigneten Zusammensetzung, die kleine Mikroporen eines durchschnittlichen Porendurchmessers von weniger als 10 nm (100 Å) hat; und
      ii) einer anderen zur Demetallisierung geeigneten Zusammensetzung, die große Mikroporen eines durchschnittlichen Porendurchmessers von 10 bis weniger als 60 nm (100 bis weniger als 600 Å) hat;
      wobei das Porenvolumen des Bereichs großer Mikroporen 10 bis 90 % ausmacht und das des Bereichs der kleinen Mikroporen 10 bis 90 % des gesamten Porenvolumens ausmacht; und
   b) Calcinieren der Teilchen.

16

6. Verfahren nach Anspruch 5, bei welchem eine Zusammensetzung Aluminiumoxid ist, um dem Bereich kleiner Mikroporen verfügbar zu machen, und die andere Zusammensetzung Kieselsäure ist, um dem Bereich großer Mikroporen verfügbar zu machen.

7. Verfahren zum Herstellen eines Wasserstoffbehandlungskatalysators, der sich zum Behandeln schwerer Beschickungen eignet, die große metalltragende Moleküle enthalten, durch Imprägnieren des calcinierten Trägers der Ansprüche 1 bis 4 mit einer oder mehreren katalytischen Metallkomponenten ausgewählt aus der Gruppe bestehend aus einem Metall, das zu Gruppen VB, VIB, VIIB und VIII des Periodensystems gehört, wobei die katalytischen Metallkomponenten in einer Menge von zwischen 0,1 % und 30 %, ausgedrückt als Metalloxid bezogen auf das Gesamtgewicht des Katalysators, anwesend sind.

8. Verfahren nach Anspruch 7, welches das Imprägnieren der kleine Mikroporen aufweisenden Zusammensetzung mit einer katalytisch wirksamen Menge eines Desulfurierungs-Metalloxids, bevor der Katalysatorträger gebildet wird, und Imprägnieren der große Mikroporen aufweisenden Zusammensetzung mit einer katalytisch wirksamen Menge eines Demetallisierungs-Metalloxids entweder bevor oder nachdem der Katalysatorträger gebildet wird, umfaßt.

9. Verfahren nach Anspruch 8, bei welchem das Metall in dem Desulfurierungs-Metalloxid ausgewählt ist aus der Gruppe bestehend aus
   a) Gruppe VIB Metallen, welche Cr, Mo und W sind;
   b) Gruppe VIII Metallen, welche Fe, Co, Ni, Ru, Rh, Pd, Os, Ir und Pt sind; und
   c) Mischungen derselben.

10. Verfahren nach Anspruch 9, bei welchem die Desulfurierungsmetalle Mo und Co sind und bei welchem das Mo mit einer Beladung von 8-30 Gew.-%, ausgedrückt als $MoO_3$, anwesend ist und bei welchem das Co mit einer Beladung von 0,1-5 Gew.-%, ausgedrückt als CoO, anwesend ist.

11. Verfahren nach Anspruch 8, bei welchem das Metall in dem Demetallisierungsmetalloxid ausgewählt ist aus der Gruppe bestehend aus
    a) Gruppe VIB Metallen, welche Cr, Mo und W sind;
    b) Gruppe VIII Metallen, welche Fe, Co, Ni, Ru, Rh, Pd, Os, Ir und Pt sind; und
    c) Gruppe VB Metallen, welche V, Nb und Ta sind;
    d) Gruppe VIIB Metallen, welche Mn, Tc und Re sind; und
    e) Mischungen derselben.

12. Verfahren nach Anspruch 11, bei welchem die Demetallisierungsmetalle Mo und Co sind und bei welchem das Mo mit einer Beladung von 0,1-8 Gew.-%, ausgedrückt als $MoO_3$, anwesend ist und bei welchem das Co mit einer Beladung von 0,1-2 Gew.-%, ausgedrückt als CoO anwesend ist.

13. Verfahren nach den Ansprüchen 7 bis 12, welches das
    a) Imprägnieren der kleine Mikroporen aufweisenden Zusammensetzung mit einer oder mehreren Komponenten ausgewählt aus der Gruppe bestehend aus Metallen der Gruppe VIB und VIII;
    b) Vermischen der imprägnierten Teilchen aus Stufe (a) mit der große Mikroporen aufweisenden Zusammensetzung;
    c) Bilden von Katalysatorteilchen aus dem Gemisch; und
    d) Calcinieren der Teilchen unter Bildung eines Wasserstoffbehandlungskatalysators, umfaßt.

14. Verfahren nach Anspruch 13, bei welchem nach Stufe (c) die Katalysatorteilchen weiter mit einer oder mehreren katalytischen Demetallisierungs-Metallkomponenten ausgewählt aus der Gruppe bestehend aus Metallen der Gruppe VB, VIB, VIIB und VIII imprägniert werden.

15. Verfahren nach Anspruch 13, bei welchem vor der Stufe (b) die große Mikroporen aufweisende Zusammensetzung mit einer oder mehreren Komponenten ausgewählt aus der Gruppe bestehend aus Metallen der Gruppen VB, VIB, VIIB und VIII imprägniert worden ist.

**Revendications**

1. Support de catalyseur adapté à une utilisation comme support de catalyseur pour l'hydrotraitement d'alimentations lourdes contenant de grandes particules métallifères caractérisé en ce que ledit support a une distribution bimodale de grandeur des micropores où les micropores ont un diamètre moyen des pores de moins de 60 nm (600 Å), ledit support comprenant des particules formées faites de deux compositions différentes d'oxydes réfractaires qui diffèrent par la grandeur des micropores, c'est-à-dire
   a) une composition ayant des petits micropores d'un diamètre moyen des pores de moins de 10 nm (100 Å) appropriée à la désulfurisation; et
   b) une autre composition ayant de grands micropores d'un diamètre moyen des pores de 10 à moins de 60 nm (100 à moins de 600 Å) appropriée à la démétallisation;
   le volume des pores de la région des grands micropores formant 10 à 90 % et celui de la région des petits micropores formant 10 à 90 % du volume total des pores.

2. Support de catalyseur selon la revendication 1, où les grands micropores ont un diamètre moyen des pores qui est égale au moins à cinq fois le diamètre moyen des molécules métallifères dans l'alimentation lourde à traiter.

3. Support de catalyseur selon la revendication 1, où la composition des petits micropores est d'alumine et la composition des grands micropores est de silice.

4. Support de catalyseur selon la revendication 1, où chaque quantité de la composition des petits micropores et de la composition des grands micropores est comprise entre 30 et 70 %.

5. Méthode de production du support de catalyseur selon les revendications 1 à 4 comprenant
   a) la formation de particules d'une poudre d'oxyde réfractaire de
   i) une composition ayant des petits micropores d'un diamètre moyen des pores de moins de 10 nm (100 Å) appropriée à la désulfurisation; et
   ii) une autre composition ayant de grands micropores d'un diamètre moyen des pores de 10 à moins de 60 nm (100 à moins de 600 Å) appropriée à la démétallisation;
   les volumes des pores de la région des grands micropores formant 10 à 90 % et celui de la région des petits micropores formant 10 à 90 % du volume total des pores; et
   b) la calcination des particules.

6. Méthode selon la revendication 5, où une composition est de l'alumine pour former la région des petits micropores et l'autre composition est de la silice pour former la région des grands micropores.

7. Méthode de production d'un catalyseur d'hydrotraitement adapté au traitement d'alimentations lourdes contenant de grandes molécules métallifères, consistant à imprégner le support calciné des revendications 1 à 4 avec un ou plusieurs composants d'un métal catalytique choisi dans le groupe consistant en un métal appartenant aux Groupes VB, VIB, VIIB et VIII de la Table Périodique, lesdits composants du métal catalytique étant présents en une quantité comprise entre 0,1 % et 30 % en termes de l'oxyde de métal, en se basant sur le poids total dudit catalyseur.

8. Méthode selon la revendication 7, consistant à imprégner la composition de petits micropores d'une quantité catalytiquement efficace d'un oxyde de métal de désulfurisation avant que le support de catalyseur ne soit formé et à imprégner la composition de grands micropores avec une quantité catalytiquement efficace d'un oxyde de métal de démétallisation soit avant ou après avoir formé le support de catalyseur.

9. Méthode selon la revendication 8, où le métal dans l'oxyde de métal de désulfurisation est choisi dans le groupe consistant en
   a) Métaux du Groupe VIB qui sont Cr, Mo et W;
   b) Métaux du Groupe VIII qui sont Fe, Co, Ni, Ru, Rh, Pd, Os, Ir et Pt; et
   c) leurs mélanges.

10. Méthode selon la revendication 9, où les métaux de désulfurisation sont Mo et Co et où Mo est présent à une charge de 8-30 % en poids en exprimant sous la forme de $MoO_3$ et où Co est présent à une charge de 0,1-5 % en poids en exprimant sous forme de CoO.

11. Méthode selon la revendication 8, où le métal dans l'oxyde de métal de démétallisation est choisi dans le groupe consistant dans
    a) Métaux du Groupe VIB qui sont Cr, Mo et W;
    b) Métaux du Groupe VIII qui sont Fe, Co, Ni, Ru, Rh, Pd, Os, Ir et Pt; et
    c) Métaux du Groupe VB qui sont V, Nb et Ta;
    d) Métaux du Groupe VIIB qui sont Mn, Tc et Re; et
    e) leurs mélanges.

12. Méthode selon la revendication 11, où les métaux de démétallisation sont Mo et Co et où Mo est présent à une charge de 0,1-8 % en poids en exprimant sous la forme de $MoO_3$ et où Co est présent à une charge de 0,1-2% en poids en exprimant sous la forme de CoO.

13. Méthode selon les revendications 7 à 12, comprenant
    a) l'imprégnation de la composition de petits micropores d'un ou plusieurs composants choisis dans le groupe consistant en métaux du Groupe VIB et VIII.
    b) le mélange des particules imprégnées de l'étape (a) avec la composition des grands micropores.
    c) la formation de particules de catalyseur à partir du mélange; et
    d) la calcination des particules pour former un catalyseur d'hydrotraitement.

14. Méthode selon la revendication 13, où, après l'étape (c), les particules du catalyseur sont de plus imprégnées d'un ou plusieurs composants du métal catalytique de démétallisation choisi dans le groupe consistant en métaux du Groupe VB, VIB, VIIB et VIII.

15. Méthode selon la revendication 13, où, avant l'étape (b), la composition des grands micropores a été imprégnée d'un ou plusieurs composants choisis dans le groupe consistant en métaux des Groupes VB, VIB, VIIB et VIII.

# FIG.I

Schematic of bimodal micropore catalyst

Material 1

Material 2

# FIG.2

Initial selectivity of hydrotreating catalysts

FIG.3

Comparison of bimodal microporous catalysts and unimodal catalysts of varying micropore diameter

FIG. 4

Bimodal microporous catalyst

FIG.5

Bimodal microporous supports containing macropores

# FIG.6

Bimodal microporous catalysts containing macropores

EP 0 243 894 B1